(19) Europäisches Patentamt
European Patent Office
Office européen des brevets

(11) **EP 3 495 412 A1**

(12) **EUROPEAN PATENT APPLICATION**

(43) Date of publication:
**12.06.2019 Bulletin 2019/24**

(51) Int Cl.:
***C08K 3/04*** *(2006.01)*

(21) Application number: **17206403.2**

(22) Date of filing: **11.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Borealis AG**
**1220 Vienna (AT)**

(72) Inventors:
• **Gkourmpis, Thomas**
**412 64 Göteborg (SE)**
• **Gitsas, Antonios**
**4021 Linz (AT)**
• **Tranchida, Davide**
**4020 Linz (AT)**

(74) Representative: **Kador & Partner PartG mbB**
**Corneliusstraße 15**
**80469 München (DE)**

(54) **SEMICONDUCTIVE POLYOLEFIN COMPOSITION COMPRISING CARBONACEOUS STRUCTURES, METHOD FOR PREPARING THE SEMICONDUCTIVE POLYOLEFIN COMPOSITION AND USE THEREOF**

(57) The present invention describes a semiconductive polyolefin composition comprising (a) an olefin polymer base resin, and (b) carbonaceous structures, wherein the semiconductive polyolefin composition has an electrical percolation threshold of not more than 10 wt% of the carbonaceous structures (b) dispersed in the olefin polymer base resin (a). A post-percolation conductivity of the semiconductive polyolefin composition of the present invention is of at least $1.10^{-5}$ S/cm at a filler loading of lower than 10 wt% of the carbonaceous structures (b) in the olefin polymer base resin (a). The electrical percolation threshold is defined as the critical concentration in wt% of the carbonaceous structures (b) in the olefin polymer base resin (a) where an exponential increase in electrical conductivity is observed.

Fig. 3 SEM picture of CS-1 and GNP M-25

**Description**

TECHNICAL FIELD

The present invention relates to a semiconductive polyolefin composition comprising carbonaceous structures. It also relates to a process for producing the semiconductive polyolefin composition as well as to the use of the semiconductive polyolefin composition in a power cable. Further, the invention is also related to an article, preferably a power cable comprising at least one semiconductive layer comprising said polyolefin composition.

BACKGROUND OF THE INVENTION

A semiconductive material is defined as a material having an electrical conductivity intermediate between insulators and conductors. A typical range of electrical conductivity for semiconductors is in the range from $10^{-9}$ to $10^3$ S/cm corresponding to electrical resistivity between $10^9$ to $10^{-3}$ ohm · cm (see for example McGraw-Hill Dictionary of Scientific and Technical Terms, 4th Ed., pp. 1698, 1989).

A common means to achieve a semiconductive polymer composite is to incorporate carbon black in the polymer in an amount typically 30 to 50 wt% such as for example disclosed in US patent No. 5,556,697. However, high loadings of carbon black result in high viscosity of the compounds. Lower carbon black loadings are desirable to improve the processability of the compounds in cable extrusions while maintaining high conductivity. One option is high structure carbon black such as Ketjen Black, allowing reducing the required amount of conductive filler but, due to the high structure is drastically increasing the viscosity even at low loadings.

Another option for increasing the conductivity in semiconductive materials is incorporation of carbon nanotubes (CNTs) and graphene nanoplatelets (GNPs). Electrically conductive polymer nanocomposites have been disclosed using single or multi-layers graphene nanoplatelets as in WO2008/045778A1 and WO2008/143692A1.

The graphene nanoparticles may be formed of thin, independent graphite flakes or platelets. The nanoparticles may also be shaped to have corners, or edges that meet to form points. The platelets may be fully isolated from the original graphite particle, or may be partially attached to the original particle. Also, more complex secondary structures such as cones are also included, see for example Schniepp, Journal of Physical Chemistry B,110 (2006) pp. 8535.

Graphene nanoplatelets (GNPs) are characterized in that the material is composed of one or several layers of two-dimensional hexagonal lattice of carbon atoms. The platelets have a length parallel to the graphite plane, commonly referred to as lateral diameter, and a thickness orthogonal to the graphite plane, commonly referred to as thickness. Another characteristic feature of GNPs is that the platelets are very thin yet have large lateral diameter, hence GNPs have a very large aspect ratio, i.e. ratio between the lateral diameter and the thickness.

Graphene nanoplatelets may also include graphene platelets that are somewhat wrinkled such as for example described in Stankovich et al, Nature 442, (2006), pp. 282. Additionally, graphene materials with wrinkles to another essentially flat geometry are included. In another aspect, the GNPs can be functionalised to improve interaction with the base resins. Non-limiting examples of surface modifications includes treatment with nitric acid; $O_2$ plasma; UV/Ozone; amine; acrylamine such as disclosed in US2004/127621 A1.

The graphene nanoparticles may be derived from treated graphite sheets, e.g. expanded graphite that can be exposed to high temperatures (e.g. in the range of from 600 to 1200 °C) so that the graphite sheets expand in dimension from 100 to 1000 or more times its original volume in an accordion-like fashion in the direction perpendicular to the crystalline planes of the graphite. These agglomerates may assume an elongated shape with dimensions in the order of 1 to 100 μm.

Possible production procedures of graphene nanoplatelets and single graphene sheets have been disclosed in e.g. US 2002/054995 A1, US 2004/127621 A1, US 2006/241237 A1 and US 2006/231792 A1. Such processes are for example further discussed by Stankovich et al, Nature 442, (2006) pp.282, and by Schniepp, Journal of Physical Chemistry B,110 (2006) pp. 853. Non-limiting examples of materials are Vor-X™ provided by Vorbecks Materials and xGNP™ provided by XG Science, Lansing, MI, USA.

US2002/054995 A1 discloses how nanoplatelets can be created by high pressure mill giving an aspect ratio between the lateral diameter and the thickness of 1500:1 and a thickness 1-100 nm.

WO 03/024602 A1 discloses separated graphite nanostructures formed of thin graphite platelets having an aspect ratio of at least 1500:1. The graphite nanostructures are created from synthetic or natural graphite using a high-pressure mill. The resulting graphite nanostructures can be added to polymeric materials to create polymer composites having increased mechanical characteristics, including an increased flexural modulus, heat deflection temperature, tensile strength, electrical conductivity, and notched impact strength. The effects observed in this disclosure require filler loadings, if added to polypropylene, as high as 38 wt% or 53 wt%.

EP 2 374 842 B1 discloses a semiconductive polyolefin composition with low loading filler concentration where graphene nanoplatelets (GNP) are incorporated into an olefin polymer base resin. The GNPs have a thickness of 100 nm or less and a lateral diameter of 200 micrometers or less, measured by AFM. Such a semiconductive polyolefin composition exhibits low viscosity, high conductivity and excellent surface smoothness. An EVA based resin filled with 10 wt% of xGNP™ (XG Science, Lansing, MI, USA) provided an electrical resistivity of $9.5 \cdot 10^6$ Ohm·cm. Partially carbon black is added to tailor the properties of the nanocomposite material.

WO 2013/033603 A1 discloses a field grading material which is an insulation material used in electrical installations. The composite material comprises a polymer material and reduced graphene oxide distributed within the polymer material. The reduced graphene oxide supplies non-linear resistivity to the composite material. By the incorporation of the reduced graphene oxide a non-linear increase in conductivity is observed, with conductivity exceeding and saturating above that of the neat polymer material. The conductivity is measured at a significantly high electrical field.

US 2006/0231792 discloses graphite nanoplatelets of expanded graphite and polymer composites produced therefrom are described. The graphite is expanded from an intercalated graphite by microwaves or radiofrequency waves in the presence of a gaseous atmosphere. The resulting plastic composite has electrical conductivity high enough to be used for electrostatic dissipation, electrostatic painting, and/or electromagnetic interference shielding applications for example.

Compositions used in semiconductive applications thus still tend to contain excessive amounts of carbon black or graphene nanoparticles. In case of carbon black this has detrimental effects on the processing and mechanical properties especially since the electrical conductivity required for wire and cable applications requires large amounts of carbon black (~35-40wt%). In case of graphene nanoparticles, large addition amounts are still required to reach improved conductivity in advanced wire and cable application. This in turn deteriorates the processing properties of the loaded polymer composition and increases production costs and equipment complexity.

Therefore, it is an object of the present invention to provide a semiconductive polyolefin composition with low filler loading and improved conductivity and processability.

SUMMARY OF THE INVENTION

It was found that this object can be achieved by an improved semiconductive polyolefin composition comprising

(a) an olefin polymer base resin, and

(b) carbonaceous structures

wherein the semiconductive polyolefin composition has an electrical percolation threshold of not more than 10 wt% of the carbonaceous structures (b) dispersed in the olefin polymer base resin (a) and a post-percolation conductivity of at least $1 \cdot 10^{-5}$ S/cm at a loading of lower than 10 wt% of the carbonaceous structures (b) in the olefin polymer base resin (a).

The semiconductive polyolefin composition is obtained by melt-mixing the olefin polymer base resin (a) with carbonaceous structures (b).

The electrical percolation threshold (also termed the "percolation point") is defined as the critical (minimum) concentration in wt% of the carbonaceous structures (b) in the olefin polymer base resin (a) where an exponential increase in electrical conductivity is observed. In other words, it indicates the minimum loading of the carbonaceous structures in wt%, at which the filler loading is such that an adequate network capable of facilitating current flow is created, which is followed by a sharp increase in the observed conductivity value. The percolation threshold indicates the efficiency of the network formation, i.e. the degree of dispersion. Thus, low percolation threshold indicates that the dispersion of the carbonaceous structures is good.

Percolation is a mathematical concept that describes the connectivity of random clusters. Percolation threshold describes the onset of long-range connectivity in random systems. Below the threshold, long range connectivity does not exist while above the threshold, long range connectivity begins to materialize. Traditionally, a large and sharp change on the measured property that results from the long range connectivity is observed in the vicinity of the percolation threshold. For the purposes of this disclosure, the "long range connectivity" equals the electrical conductivity. The electrical conductivity increases in the vicinity of the threshold by (at least) 2-3 orders of magnitude. This phenomenon is discussed in detail by Thomas Gkourmpis, Innovation and Technology, Borealis AB, Stenungsund SE in "Controlling the Morphology of Polymers" by Geoffrey R. Mitchell and Ana Tojeira (Eds.), incorporated herein by reference.

The term "filler loading" in the context of the present description refers to the added amount of the carbonaceous structures in weight percent in relation to the weight of the semiconductive polyolefin composition.

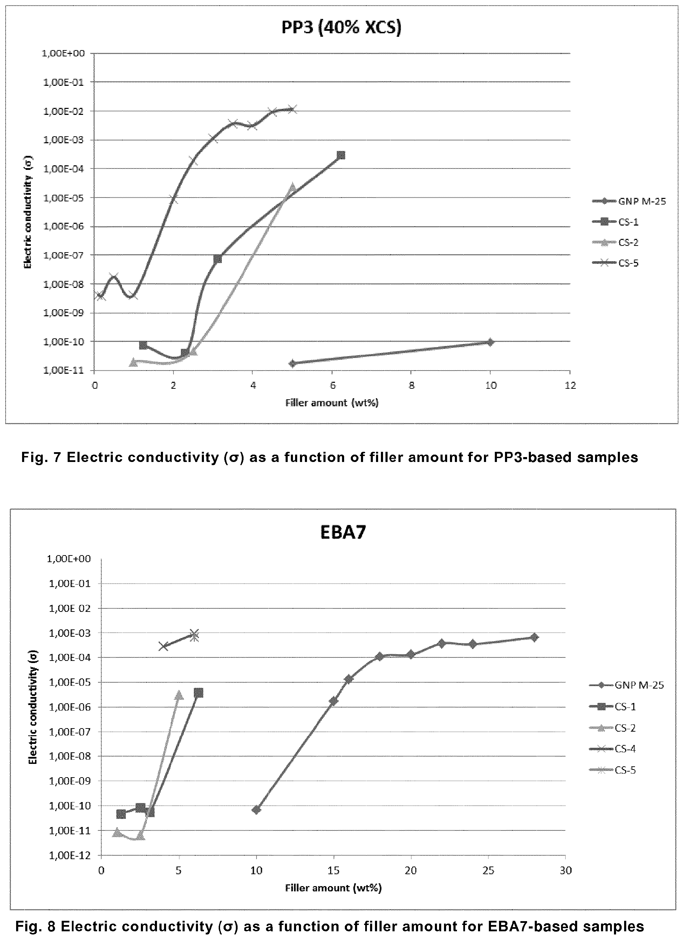

The electrical saturation conductivity above the percolation threshold is measured at a predetermined loading (wt% of the carbonaceous structures in the matrix resin) of the filled polyolefin composition where the network is fully developed and where, despite further addition of the filler, the conductivity is substantially constant compared to the percolation region. This is explained by the schematic representation on page 211 (Figure 8.1) and page 215 (Figure 8.3) of Thomas Gkourmpis, Innovation and Technology, Borealis AB, Stenungsund SE in "Controlling the Morphology of Polymers" by Geoffrey R. Mitchell and Ana Tojeira (Eds.), Springer International Publishing Switzerland, 2016, cited previously.

The post-percolation conductivity above the percolation threshold is observed at a loading of the carbonaceous structures wherein increased amount of the filler lead to small changes (within an order of magnitude) in conductivity in comparison to the percolation region. Post-percolation conductivity may have the same or different value compared to saturation conductivity.

The term "copolymer" refers to a polymer made from at least two monomers. It includes, for example, copolymers, terpolymers and tetrapolymers.

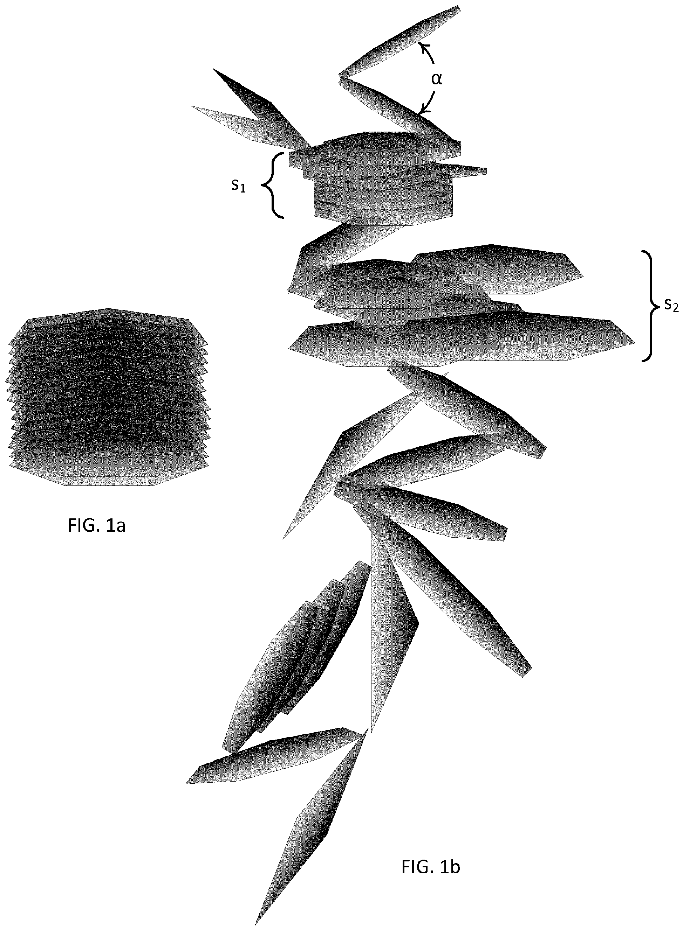

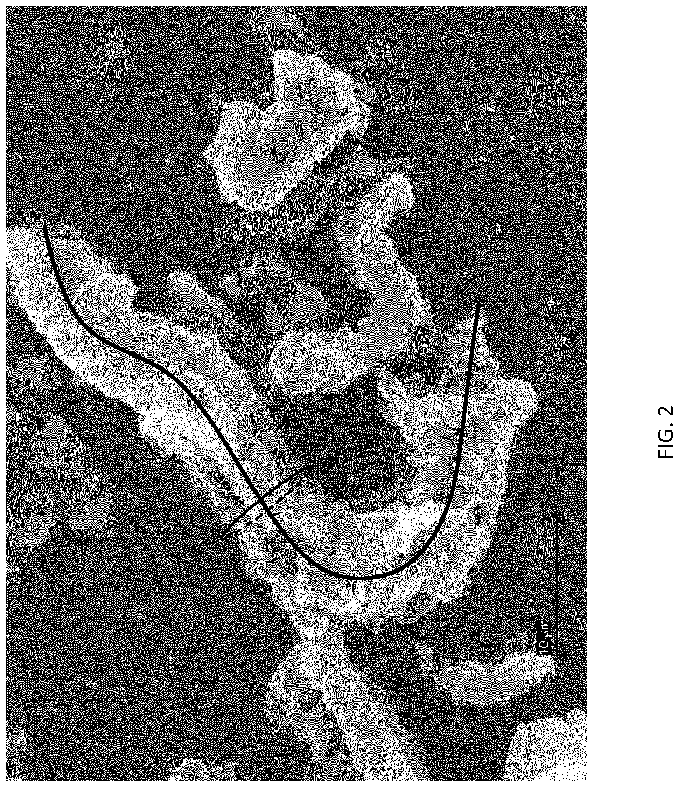

The term "carbonaceous structure" refers to partially dispersed clusters of a plurality of carbonaceous components, wherein each carbonaceous component is constituted by allotropes of carbon, in particular graphite and graphene. According to the present invention, the carbonaceous structure of the present invention may be a reduced graphite oxide worm-like (rGOW) structure, or particle. The rGOW structure may comprise any number of reduced oxidized graphene platelets, wherein at least some of the platelets are in a plane that is not parallel with that of an adjacent platelet, as shown in Fig. 1 b. Although the rGOW platelets are referred to as planar, they are typically not as planar as, for example, graphene sheets, but rather include wrinkles and deformities that result from the oxidation/reduction processes by which the particles have been treated. As a result, the rGOW platelets are thicker than graphene sheets although they still retain a generally planar shape having a diameter that is several times greater than the thickness of the platelet. As can be seen in the photomicrograph of Fig. 2, these platelets include multiple sub-sections that are at distinct angles to each other. This unevenness contributes to the high surface area and low bulk density of the particles.

An adjacent platelet is defined as a platelet that is joined directly to the given platelet on either major side of the given platelet. A platelet is not adjacent if it is joined to the given platelet via only a third platelet. A platelet may be at an angle to a first adjacent platelet on one side and retain a parallel structure with a second adjacent platelet on the opposed side. Many of the platelets in an rGOW structure can remain in a graphite configuration (see Fig. 1a) in which they are parallel to each other and remain bound together by van der Waals forces. This is for example illustrated by stacks s1 and s2 in Fig. 1b. Particles of rGOW do not typically have extensive graphitic structures and different embodiments of rGOW structures may be limited to parallel platelet composite structures containing fewer than 15, preferably fewer than 12, more preferably fewer than 11 adjacent parallel platelets. rGOW particles exhibit a structure where any dimension of the particle, such as length L or diameter d, is greater than the sum of thicknesses w of all the graphene platelets in the particle. For example, if the thickness w of a single graphene platelet is about 1 nm, then an rGOW particle comprising 1,000 platelets would be greater than 1 $\mu$m in both length L and diameter d. These three-dimensional particles also have an extension of at least 50 nm along each of the x, y and z axes as measured through at least one origin in the particle. An rGOW particle is not a planar structure and has a morphology that distinguishes it from both graphite (stacks of graphene platelets) and individual graphene sheets. It is notable however, that rGOW particles can be exfoliated into single platelets, or stacks of platelets, that can have at least one extension along any of x, y and z axes that is less than 100 nm, preferably less than 50 nm, more preferably less than 10 nm, or even more preferably less than 5 nm. After an rGOW particle has been exfoliated, the resulting single platelets or stacks of parallel platelets are no longer rGOW particles.

The rGOW particles described herein can comprise a plurality of graphene platelets and in various embodiments may include greater than 10, preferably greater than 100, more preferably greater than 1000 graphene platelets. In various embodiments, the particles may be linear or serpentine, can take roughly spherical shapes, and in some cases may be cylindrical. The structure of an rGOW particle can be described as accordion-like because of the way the particle expands longitudinally due to the alternating edges at which the platelets remain joined. For example, as shown in Fig. 1b, at least some of the adjacent graphene planes are not parallel and are at angles to each other. As may be seen in Fig. 1b, at least some of the adjacent graphene planes may be positioned at an angle $\alpha$ relatively each other, wherein the angle $\alpha$ may for example be about 25°. Various embodiments may include one or more pairs of adjacent graphene platelets that are joined at angles of, for example, 10°, 25°, 35°, 45°, 60° or 90°. Different adjoining pairs of graphene platelets may remain joined at different edges or points, so the graphene platelets are not necessarily canted in the same direction. If the adjacent graphene platelets remain attached randomly to each other at platelet edges after expansion, the particle will extend in a substantially longitudinal direction.

As may be seen in Figs. 1b and 2, the rGOW particle has a transverse extension, or diameter d, and a longitudinal extension being substantially perpendicular to the transverse extension, or length L. Further, each of the platelets in the rGOW particle has an extension in the longitudinal direction, or thickness w. rGOW particles thus have elongated, expanded, worm-like structures that can have an aspect ratio, i.e. length L/diameter d, that can be greater than 1:1, greater than 2:1, greater than 3:1, greater than 5:1 or greater than 10:1. The length L of an rGOW particle is the longest line that passes through a central longitudinal core of the particle from one end to the other (Fig. 2). This line may be curved or linear, or have portions that are curved or linear, depending on the specific particle. The line runs substantially perpendicular to the average plane of the platelets in any particular portion along the line. The length L of an rGOW particle can be greater than 1.0 $\mu$m, greater than 2.0 $\mu$m, greater than 5.0 $\mu$m, greater than 10 $\mu$m or greater than 100

μm. The diameter d of the rGOW particle is deemed to be the diameter of the smallest circle that can fit around the particle at its midpoint (Fig. 2). The diameter d (diameter of the circle shown in Fig. 2) can be, for example, less than 200 μm, less than 100 μm, less than 50 μm, less than 20 μm, less than 10 μm, less than 5 μm, less than 2 μm or less than 1 μm. Further, the diameter d may be greater than 50 nm, greater than 100 nm, greater than 1 μm, greater than 10 μm, greater than 100 μm. Preferred diameter ranges include 100 nm to 100 μm, 500 nm to 100 μm, 500 nm to 50 μm, 2.0 μm to 30 μm, 2.0 μm to 20 μm, 2.0 μm to 15 μm, 2.0 μm to 10 μm, 1.0 μm to 5 μm, 100 nm to 5 μm, 100 nm to 2 μm, 100 nm to 1 μm. The diameter d of an rGOW particle along its length L need not be constant and can vary by a factor of greater than 2, greater than 3 or greater than 4 along the length L of the rGOW particle.

An rGOW particle may contain carbon, oxygen and hydrogen and may be essentially void of other elements. A particle is essentially void of an element if the element is absent or is present only as an impurity. In specific embodiments, an rGOW particle can comprise greater than 80%, greater than 90%, greater than 95% or greater than 99% carbon by weight. Some particles may include oxygen, and particularly covalently bound oxygen, at concentrations by weight of greater than 0.1%, greater than 0.5%, greater than 1.0%, greater than 5.0%, greater than 10.0%, greater than 14.0%, less than 25%, less than 15%, less than 10%, less than 5.0%, less than 3%, less than 2% or less than 1.0%. Hydrogen content may be greater than 0.1% or greater than 1% by weight. Further, hydrogen content may be less than 1%, less than 0.1% or less than 0.01% by weight. Heteroatoms such as nitrogen or sulfur may be present at amounts greater than 0.01% or greater than 0.1% by weight.

Reduced graphite oxide worm particles can exhibit a low density. For example, in various embodiments the particles may have a bulk density of less than 100 g/L, less than 50 g/L, less than 30 g/L, less than 20 g/L, less than 10 g/L, greater than 5 g/L, greater than 10g/L or greater than 15 g/L when measured using ASTM D7481-09. When rGOW particles are in the form of clusters, the density may be between 15 g/L and 100 g/l. On the other hand, when densities are between 5 g/L and 15 g/L, the rGOW particles are in the form of worms or densified worms. These particles may also exhibit high surface area and may have BET (Brunauer, Emmett and Teller, ASTM D6556-04) surface areas of greater than 200 $m^2$/g, greater than 300 $m^2$/g, greater than 500 $m^2$/g, greater than 700 $m^2$/g, greater than 900 $m^2$/g or greater than 1000 $m^2$/g. The rGOW particles may also exhibit high structure, and when measured using oil absorption number (OAN) can exhibit structures of greater than 500 mL/100 g, greater than 1000 mL/100 g, greater than 1500 mL/100 g or greater than 2000 mL/100 g (ASTM D2414-16).

One indicator of the oxygen content in a rGOW particle is the volatile material content of the particle. The rGOW particles can have a volatile content, as measured by thermogravimetric analysis (TGA) from 125°C to 1000°C under inert gas, of greater than 1%, greater than 1.5%, greater than 2.0%, greater than 2.5%, greater than 5%, greater than 10%, greater than 15% or greater than 20%. Further, the volatile content by the same technique can be less than 30%, less than 25%, less than 20%, less than 15%, less than 10%, less than 5%, less than 3% or less than 2%. Traditionally, the high oxygen content lowers the conductivity of a material and makes it insulating. Therefore, graphene oxide used as conductive filler is usually reduced in order to lower the oxygen content. On the other hand, the carbonaceous structures of the present invention surprisingly exhibit high conductivity despite the high oxygen levels.

The oxygen content of the rGOW particles, when compared to the parent graphite oxide, can be reduced by at least 25%, at least 50% or at least 75%. Similarly, the energetic content of the particles (as measured by Differential Scanning Calorimetry, DSC) can be reduced by, for example, at least 25%, at least 50% or at least 75%. The decomposition energy of the rGOW particles can be, for example, less than 150 J/g, less than 100 J/g, less than 50 J/g or less than 20 J/g.

The graphitic structure of an rGOW particle can be investigated by Raman spectroscopy. Pure graphite has a Raman spectrum with a strong G band (1580 $cm^{-1}$) and non-existent D band (1350 $cm^{-1}$). Graphite oxide exhibits a strong D band as well as G band. Reduced graphite oxide and rGOW particles have a strong D band that in many cases is stronger than the G band (FWHM). The ratio of the D band to G band may be greater than 1.0, greater than 1.1 or greater than 1.2.

Particles of rGOW can often be differentiated from graphite and similar materials due to differences in crystallinity. Crystallinity of rGOW particles can be determined by Raman spectroscopy and in various embodiments the rGOW particles can exhibit crystallinity values of less than 40%, less than 30% or less than 20%. X-ray diffraction can also be helpful in differentiating between graphite and materials such as graphite oxide and rGOW particles that exhibit different interlayer spacing than does graphite. Graphite has a strong XRD peak between 25° and 30°, while rGOW particles typically have no discernible peak in this range.

It is worth noting that the definition of carbonaceous structures according to the present invention does not include carbon nanotubes.

The inventors have surprisingly found that carbonaceous structures of the present invention dispersed in an olefin base resin may change their morphology during compounding step, assumingly due to the dedensification. Thus, the final semiconductive polyolefin composition of the present invention possesses new advanced and surprising properties, which enable new applications in the wire and cable area.

According to the present invention, the carbonaceous structures incorporated into the base resin are intimately mixed in the compounding step and change its morphology thereby. Without wishing to be bound by theory, it is assumed that clusters and/or stacks of carbonaceous structures are at least partly exfoliated in the compounding step to drastically increase BET surface area and decrease the diameter d of the carbonaceous structures. As a result, the increase in conductivity and decrease in volume resistivity of the semiconductive polyolefin compositions of the present invention is surprisingly achieved. Further, the increased conductivity may also be explained by good dispersion as a consequence of the specific physical features of carbonaceous structures, allowing an improved exfoliation in the polymer matrix and thus less agglomerates.

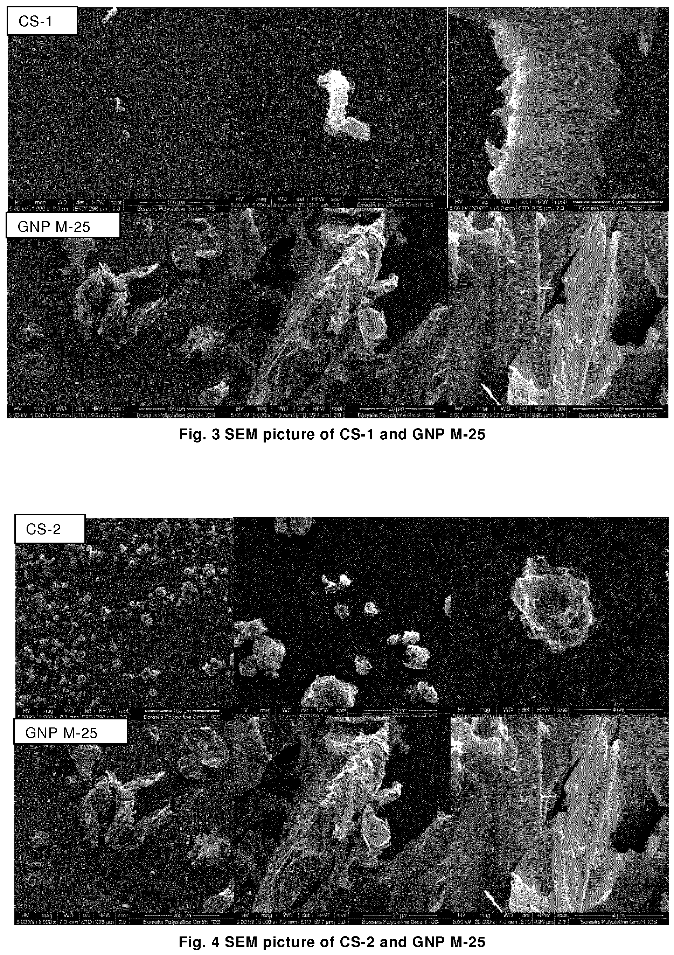

The semiconductive polyolefin composition of the present invention has an electrical percolation threshold of not more than 10 wt% of the carbonaceous structures (b) dispersed in the olefin polymer base resin (a), as may be seen in Figs 3-7, and will be discussed in greater detail below.

The semiconductive polyolefin composition of the present invention has an electrical post-percolation conductivity above the percolation threshold of at least $1\cdot10^{-5}$ S/cm at a loading of 10 wt% of the carbonaceous compound (b) in the olefin polymer base resin (a), preferably at least $1\cdot10^{-4}$ S/cm, more preferably at least $1\cdot10^{-3}$ S/cm, still more preferably at least $1\cdot10^{-2}$ S/cm or even $1\cdot10^{-1}$ S/cm or more.

The above values of post-percolation conductivity can be reached at even lower loading of the carbonaceous structures, preferably at a loading of not more than 5 wt%, more preferably not more than 3 wt%, even more preferably not more than 2.5 wt%, even more preferably not more than 2 wt%, still more preferably not more than 1.5 wt%, and still more preferably below 0.1 wt%.

The semiconductive polyolefin composition of the present invention surprisingly provides a number of advantages. First, it has an improved processability due to comparatively low viscosity (higher $MFR_2$ values) than conventional semiconductive polyolefin compositions containing carbon black as the conductive filler. Unexpectedly, the carbonaceous structures according to the present invention being present as conductive filler provide at lower loadings the same or even better level of conductivity compared to both conventional carbon blacks and previously reported graphene fillers.

Throughout the description of the present invention, the term "polyolefin" or "olefin polymer" encompasses both an olefin homopolymer and a copolymer of an olefin with one or more comonomer(s). As well-known, "comonomer" refers to copolymerisable monomer units.

The olefin polymer base resin (a) may be selected from the group consisting of a $C_2$ to $C_8$ olefin homo- or copolymer. Preferably, the polyolefin is an olefin homopolymer or copolymer which contains one or more comonomer(s), more preferable an ethylene homo- or copolymer or a propylene homo- or copolymer, and most preferably a polyethylene, which can be made in a low pressure process or a high pressure process. Preferably, the polyolefin is a copolymer of ethylene with at least one comonomer selected from unsaturated esters or a heterophasic propylene copolymer. The polyolefin can e.g. be a commercially available polymer or can be prepared according to or analogously to known polymerization process described in the chemical literature.

When the polyolefin, preferably polyethylene, is produced in a low pressure process, it is typically produced by a coordination catalyst, preferably selected from a Ziegler-Natta catalyst, a single site catalyst, which comprises a metallocene and/or non-metallocene catalyst, and/or a Cr catalyst, or any mixture thereof. The polyethylene produced in a low pressure process can have any density, e.g. be a very low density linear polyethylene (VLDPE), a linear low density polyethylene (LLDPE) copolymer of ethylene with one or more comonomer(s), medium density polyethylene (MDPE) or high density polyethylene (HDPE). The polyolefin can be unimodal or multimodal with respect to one or more of molecular weight distribution, comonomer distribution or density distribution. Low pressure polyethylene may be multimodal with respect to molecular weight distribution. Such a multimodal polyolefin may have at least two polymer components which have different weight average molecular weight, preferably a lower weight average molecular weight (LMW) and a higher weight average molecular weight (HMW). A unimodal polyolefin, preferably low pressure polyethylene, is typically prepared using a single stage polymerization, e.g. solution, slurry or gas phase polymerization, in a manner well-known in the art. A multimodal (e.g. bimodal) polyolefin, for example a low pressure polyethylene can be produced by mechanically blending two or more, separately prepared polymer components or by in-situ blending in a multistage polymerization process during the preparation process of the polymer components. Both mechanical and in-situ blending is well-known in the field. A multistage polymerization process may preferably be carried out in a series of reactors, such as a loop reactor, which may be a slurry reactor and/or one or more gas phase reactor(s). Preferably, a loop reactor and at least one gas phase reactor is used. The polymerization may also be preceded by a pre-polymerization step.

When the polyolefin, preferably polyethylene, is produced in a high pressure process, a LDPE homopolymer or an LDPE copolymer of ethylene with one or more comonomers may be produced. The LDPE homopolymer or copolymer may be unsaturated. For the production of ethylene (co)polymers by high pressure radical polymerization, reference can be made to the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R.Klimesch, D.Littmann and F.-O. Mähling pp. 7181-7184.

Polyolefin polymers may include, but are not limited to, copolymers of ethylene and unsaturated ester with an ester content of up to 50 wt%, based on the weight of the copolymer. Non-limiting examples of unsaturated esters are vinyl esters, acrylic acid and methacrylic acid esters, typically produced by conventional high pressure processes. The ester can have from 3 to about 20 carbon atoms, preferably 4 to 10 atoms. Non-limiting examples of vinyl esters are: vinyl acetate, vinyl butyrate, and vinyl pivalate. Non-limiting examples of acrylic and methacrylic acid esters are: methyl acrylate, ethyl acrylate, t-butyl acrylate, n-butyl acrylate, isopropyl acrylate, hexyl acrylate, decyl acrylate and lauryl acrylate.

The polyolefins according to the present invention may be elastomeric ethylene/$\alpha$-olefin copolymers having an $\alpha$-olefin content of from 15 wt%, preferably from 25 wt%, based on the weight of the copolymer. These copolymers typically have an $\alpha$-olefin content of 50 wt% or less, preferably 40 wt% or less and most preferably 35 wt% or less, based on the weight of the copolymer. The $\alpha$-olefin content is measured by $^{13}$C nuclear magnetic resonance (NMR) spectroscopy as described by Randall (Re. Macromolecular Chem. Phys. C29 (2&3)). The $\alpha$-olefin is preferably a $C_{3-20}$ linear, branched or cyclic $\alpha$-olefin. Examples of $C_{3-20}$ $\alpha$-olefins include propene, 1-butene, 4-methyl-1-pentene, 1-hexene, 1-octene, 1-decene, 1-dodecene, 1-tetradecene, 1-hexadecene and 1-octadecene. The $\alpha$-olefins can also contain a cyclic structure, such as cyclohexane or cyclopentane, resulting in an $\alpha$-olefin such as 3-cyclohexyl-1-propene and vinyl cyclohexane. Although not $\alpha$-olefins in the classical sense of the term, for the purpose of this invention certain cyclic olefins such as norbornene and related olefins, particularly 5-ethylidene-2-norbornene, are encompassed by the term "$\alpha$-olefins" and can be used as described above. Similarly, styrene and its related olefins, e.g. $\alpha$-methylstyrene, are $\alpha$-olefins for the purpose of this invention. Illustrative examples of copolymers in the sense of the present invention include ethylene/propylene, ethylene/butene, ethylene/1-hexene, ethylene/1-octene, ethylene/styrene and similar. Illustrative examples of terpolymers include ethylene/propylene/1-octene, ethylene/butene/1-octene, ethylene/propylene/diene monomer (EPDM) and ethylene/butene/styrene. The copolymer can be random or blocky.

Copolymerization can be carried out in the presence of one or more further comonomers which are copolymerizable with the two monomers mentioned above and which, for example, may be selected from vinylcarboxylate esters such as vinyl acetate and vinyl pivalate; (meth)acrylates such as methyl(meth)-acrylate, ethyl(meth)acrylate and butyl(meth)acrylate; (meth)acrylic acid derivatives such as (meth)acrylonitrile and (meth)acrylamide; vinyl ethers, such as vinylmethyl ether and vinylphenyl ether; $\alpha$-olefins such as propylene, 1-butene, 1-hexene, 1-octene and 4-methyl-1-pentene; olefinically unsaturated carboxylic acids, such as (meth)acrylic acid, maleic acid and fumaric acid; and aromatic vinyl compounds, such as styrene and alpha-methyl styrene.

Preferred comonomers are vinyl ethers of monocarboxylic acids having 1-4 carbon atoms, such as vinyl acetate and (meth)acrylate of alcohols having 1-8 carbon atoms, such as methyl(meth)acrylate. The expression "(meth)acrylic acid" used herein is intended to include both acrylic acid and methacrylic acid. The comonomer content in the polymer may be present in the amount of 40 wt% or less, preferably 0.5-35 wt%, more preferably 1-25 wt%.

Other examples of olefin polymers are: polypropylene, e.g. homopolypropylene, propylene copolymer; polybutene, butene copolymers; highly short chain branched $\alpha$-olefins copolymers with an ethylene co-monomer content of 50 mole percent or less; polyisoprene; EPR (ethylene copolymerized with propylene); EPDM (ethylene copolymerized with propylene and a diene such as hexadiene, dicyclopentadiene, or ethylidene norbornene); copolymers of ethylene and an $\alpha$-olefin having 3 to 20 carbon atoms such as ethylene/octene copolymers; terpolymers of ethylene, $\alpha$-olefin and a diene; terpolymers of ethylene, $\alpha$-olefin and an unsaturated ester; copolymers of ethylene and vinyl-tri-alkyloxy silane; terpolymers of ethylene, vinyl-tri-alkoloxy silane and an unsaturated ester; or copolymers of ethylene and one or more acrylonitrile and maleic acid esters. Further, the olefin polymer may comprise ethylene ethyl acrylate. The comonomers can be incorporated randomly or in block and/or graft structures.

The olefin polymer may comprise or may be a heterophasic olefin copolymer, e.g. a heterophasic propylene copolymer. The heterophasic propylene copolymer may preferably be a heterophasic copolymer comprising a propylene random copolymer as matrix phase (RAHECO) or a heterophasic copolymer having a propylene homopolymer as matrix phase (HECO). A random copolymer is a copolymer where the comonomer part is randomly distributed in the polymer chains and it also consists of alternating sequences of two monomeric units of random length (including single molecules). It is preferred that the random propylene copolymer comprises at least one comonomer selected from the group consisting of ethylene and $C_4$-$C_8$ alpha-olefins. Preferred $C_4$-$C_8$ $\alpha$-olefins are 1-butene, 1-pentene, 4-methyl-1-pentene, 1-hexene, 1-heptene or 1-octene, more preferred 1-butene. A particularly preferred random propylene copolymer may comprise or consist of propylene and ethylene. Furthermore, the comonomer content of the polypropylene matrix preferably is 0.5 to 10 wt%, more preferably 1 to 8 wt% and even more preferably 2 to 7 wt %. For combining optimum processability with the required mechanical properties, the incorporation of the comonomer can be controlled in such a way that one component of the polypropylene contains more comonomer than the other. Suitable polypropylenes are described e.g. in WO 03/002652.

The semiconductive polyolefin compositions may be crosslinkable. "Crosslinkable" means that when the semiconductive polyolefin composition is used in cable applications, the cable layer can be crosslinked before the use in the end application thereof. In crosslinking reaction of a polymer, interpolymer crosslinks (bridges) are primarily formed. Crosslinking can be initiated by free radical reaction using irradiation or preferably using a crosslinking agent, which is typically a free radical generating agent, or by the incorporation of crosslinkable groups into polymer component(s), as known in the art. Moreover, in cable applications, the crosslinking step of the semiconductive composition is typically carried out after the formation of the cable.

The free radical generating crosslinking agent can be a radical forming crosslinking agent which contains at least one -O-O- bond or at least one -N=N- bond. More preferably, the crosslinking agent is a peroxide, whereby the crosslinking is preferably initiated using a well-known peroxide crosslinking technology that is based on free radical crosslinking and is well described in the field. The peroxide can be any suitable peroxide conventionally used in the field.

Crosslinking may also be achieved by incorporation of crosslinkable groups, preferably hydrolysable silane groups, into the polymer component(s) of the semiconductive composition. The hydrolysable silane groups may be introduced into the polymer by copolymerisation of e.g. ethylene monomers with silane group containing comonomers or by grafting with silane groups containing compounds, i.e. by chemical modification of the polymer by addition of silane groups mostly in a free radical grafting process. Such silane groups containing comonomers and compounds are well-known in the field and are commercially available. The hydrolysable silane groups are typically then crosslinked by hydrolysis and subsequent condensation in the presence of a silanol-condensation catalyst and water trace in a manner known in the art. Also, silane crosslinking technique is well-known in the art.

Preferably, the crosslinkable semiconductive composition layer comprises crosslinking agent(s), preferably free radical generating agent(s), more preferably peroxide. Accordingly, the crosslinking of at least the insulation layer, and optionally, and preferably, of the at least one semiconductive layer, is preferably carried out by free radical reaction using one or more free radical generating agents, preferably peroxide(s).

When peroxide is used as a crosslinking agent, then the crosslinking agent is preferably used in an amount of less than 10 wt%, more preferably in an amount of between 0.05 to 8 wt%, still more preferably in an amount of 0.2 to 3 wt% and even more preferably in an amount of 0.3 to 2.5 wt% with respect to the total weight of the composition to be crosslinked.

Non-limiting examples of peroxidic crosslinking agents are organic peroxides, such as di-*tert*-amylperoxide, 2,5-di(*tert*-butylperoxy)-2,5-dimethyl-3-hexyne, 2,5-di(*tert*-butylperoxy)-2,5-dimethylhexane, *tert*-butylcumylperoxide, di(*tert*-butyl)peroxide, dicumylperoxide, butyl-4,4-bis(*tert*-butylperoxy)-valerate, 1,1-bis(*tert*-butylperoxy)-3,3,5-trimethylcyclohexane, *tert*-butylperoxybenzoate, dibenzoylperoxide, bis(*tert* butylperoxyisopropyl)benzene, 2,5-dimethyl-2,5-di(benzoylperoxy)hexane, 1,1-di(*tert*-butylperoxy)cyclohexane, 1,1-di(*tert* amylperoxy)cyclohexane, or any mixtures thereof. Preferably, the peroxide is selected from 2,5-di(*tert*-butylperoxy)-2,5-dimethylhexane, di(*tert*-butylperoxyisopropyl)benzene, dicumylperoxide, *tert*-butylcumylperoxide, di(*tert*-butyl)peroxide, or mixtures thereof.

Further, the semiconductive polyolefin composition can comprise further additive(s), such as antioxidant(s), stabiliser(s), water tree retardant additive(s), processing aid(s), scorch retarder(s), filler(s), metal deactivator(s), free radical generating agent(s), crosslinking booster(s), flame retardant additive(s), acid or ion scavenger(s), additional inorganic filler(s), voltage stabilizer(s) or any mixtures thereof. Additives are typical use in total amount from 0.01 wt% to 10 wt%.

Non-limiting examples of antioxidants are sterically hindered or semi-hindered phenols, aromatic amines, aliphatic sterically hindered amines, organic phosphites or phosphonites, thio compounds, and mixtures thereof.

Preferably, the antioxidant is selected from the group of diphenyl amines and diphenyl sulfides. The phenyl substituents of these compounds may be substituted with further groups such as alkyl, alkylaryl, arylalkyl or hydroxy groups.

Preferably, the phenyl groups of diphenyl amines and diphenyl sulfides are substituted with *tert*-butyl groups, preferably in meta or para position, which may bear further substituents such as phenyl groups.

More preferred, the antioxidant is selected from the group of 4,4'-bis(1,1'dimethylbenzyl)diphenylamine, para-oriented styrenated diphenylamines, 6,6'-di-*tert*-butyl-2,2'-thiodi-*p*-cresol, tris(2-*tert*-butyl-4-thio-(2'-methyl-4'hydroxy-5'-*tert*-butyl)phenyl-5-methyl)phenylphosphite, polymerized 2,2,4-trimethyl-1,2-dihydroquinoline, or derivatives thereof. Of course, not only one of the above-described antioxidants may be used but also any mixture thereof.

The amount of an antioxidant is preferably from 0.005 to 2.5 wt%, based on the weight of the semiconductive composition, more preferably from 0.005 to 2 wt%, still more preferably from 0.01 to 1.5 wt%, and even more preferably from 0.04 to 1.2 wt%, based on the weight of the semiconductive composition.

The scorch retarder (SR) is a well-known additive type in the field and can i.e. prevent premature crosslinking. As also known the SR may also contribute to the unsaturation level of the polymer composition. Examples of scorch retarders are allyl compounds, such as dimers of aromatic alpha-methyl alkenyl monomers, preferably 2,4-di-phenyl-4-methyl-1-pentene, substituted or unsubstituted diphenylethylenes, quinone derivatives, hydroquinone derivatives, monofunctional vinyl containing esters and ethers, monocyclic hydrocarbons having at least two or more double bonds, or mixtures thereof. Preferably, the amount of a scorch retarder is within the range of 0.005 to 2.0 wt%, more preferably within the range of 0.005 to 1.5 wt%, based on the weight of the semiconductive composition. Further preferred ranges are e.g. from 0.01 to 0.8 wt%, 0.03 to 0.75 wt%, 0.03 to 0.70 wt%, or 0.04 to 0.60 wt%, based on the weight of the semiconductive composition. One preferred SR added to the semiconductive composition is 2,4-diphenyl-4-methyl-1-pentene.

Examples of processing aids include but are not limited to metal salts of carboxylic acids such as zinc stearate or calcium stearate; fatty acids; fatty amids; polyethylene wax; copolymers of ethylene oxide and propylene oxide; petroleum waxes; non-ionic surfactants and polysiloxanes.

Non-limiting examples of additional fillers are clays precipitated silica and silicates; fumed silica calcium carbonate.

It is intended throughout the present description that the expression "compounding" embraces mixing of the material according to standard methods to those skilled in the art. Non-limiting examples of compounding equipments are continuous single or twin screw mixers such as Farell™, Werner and Pfleiderer™, Kobelco Bolling™ and Buss™, or internal batch mixers, such as Brabender™ or Banbury™.

Any suitable process known in the art may be used for the preparation of the semiconductive polyolefin compositions of the present invention such as dry-mixing, solution mixing, solution shear mixing, melt mixing, extrusion, etc. It is however preferred to prepare the semiconductive polyolefin composition by melt-mixing said olefin polymer base resin (a) with carbonaceous structures (b) in an extruder, such as a Brabender compounder.

The present invention is also directed to a process for producing the preferred inventive semiconductive polyolefin composition, comprising pre-mixing of the carbonaceous structures. Pre-mixing as used herein shall indicate that the mixing occurs before the resulting mixture is contacted and mixed with the olefin polymer base resin. The premixing may be conducted in a dispersant such as isopropanol. Preferably, the olefin polymer base resin is subsequently added to the dispersed carbonaceous structures and/or filler mixture, before the complete mixture is introduced into a compounder, preferably an extruder, such as a Brabender compounder, as will be described in greater detail below.

The object of the present invention can also be achieved by the use of the semiconductive polyolefin composition in a semiconductive layer of a power cable.

Further, the present invention is concerned with semiconductive polyolefin composition obtainable by such a process.

Below, the invention is described by virtue of non-limiting examples.

BRIEF DESCRIPTION OF THE DRAWINGS

Embodiments of the invention will now be described by way of examples with reference to the accompanying drawings, of which:

Fig. 1a      Schematic graphite configuration

Fig. 1b      Schematic structure of an rGOW particle

Fig. 2      SEM of an rGOW particle

Fig. 3      SEM of GNP M-25 and CS-1

Fig. 4      SEM of GNP M-25 and CS-2

Figs. 5-9      Electric conductivity ($\sigma$) as a function of filler amount for the inventive samples

DETAILED DESCRIPTION OF THE INVENTION

**Examples**

**1. Materials**

**(a) Polymer Base Resins**

PP1 is an isotactic propylene homopolymer ($MFR_2$=3.3 g/10 min, Isotacticity Index: 98%, $T_m$=163°C).
PP2 is a high crystallinity propylene homopolymer ($MFR_2$=8.0 g/10 min, density: 0.900-0.910 g/cm$^3$).
PP3 (40% XCS) is a random heterophasic propylene copolymer ($MFR_2$=3.8 g/10 min, $T_m$=150°C).
EBA7 is an ethylene butyl acrylate copolymer (butyl acrylate content of 17 wt%, $MFR_2$=7 g/10 min).
EBA0.85 is ethylene butyl acrylate copolymer (BA content: 17%, $MFR_2$=0.85 g/10 min (190°C/2.16 kg), $T_m$=96°C).

**(b) Carbonaceous structures**

GNP M-25 was obtained from XG Sciences, Lansing, MI USA. It consists of carbonaceous structures having a BET surface area of 120 to 150 m$^2$/g, a particle size distribution of 5 to 25 $\mu$m, and a content of volatiles of lower than 1 wt%.

CS-1, CS-2, CS-3, CS-4 and CS-5 are carbonaceous structures which form clusters or worm-like structures and are obtained from Cabot Corporation, Boston, MA, USA. The properties of the carbonaceous structures are summarized in Table 1.

**Table 1**

| Sample | BET (m$^2$/g) | Volatile (%) | PSD (μm) | Form | Density (g/L) |
|---|---|---|---|---|---|
| GNP M-25 | 120-150 | <1 | 5-25 | Platelets | 2200 |
| CS-1 | 400 | 10 | N/A | Worms | 10 |
| CS-2 | 400 | 10 | 8.8 | Loose Clusters | 20 |
| CS-3 | 480 | 2.6 | N/A | Worms | 6-8 |
| CS-4 | 450 | 2 | 25 | Loose Clusters | 20 |
| CS-5 | 674 | 5.4 | N/A | Worms | 8 |

Figs. 3 and 4 show SEM photographs at different magnifications of selected carbonaceous structures GNP M-25 (comparative), CS-2 (inventive) and CS-1 (inventive). These pictures represent the different fillers and give a clear indication of the relative level of agglomeration present. GNP M-25 shown in Fig. 3 has a relatively high agglomeration having particles with a maximum size of greater than 100 $\mu$m and an average thickness of 10-100 $\mu$m. CS-2 shown in Fig. 4 exhibits smaller agglomerates or clusters of spherical shape of size not more than 5 $\mu$m. CS-1 shown in Fig. 3 exhibits smaller worm-like agglomerates with an average size of 5-25 $\mu$m. CS-3, CS-4 and CS-5 have similar structures to those of CS-1 and CS-2.

**2. Measurement methods and procedures**

**(a) Melt Flow Rate**

The MFR$_2$ was measured with 2.16 kg load at 190°C for polyethylene and at 230°C for polypropylene according to ISO 1133. The MFR$_{21}$ was measured with 21.6 kg load at 190°C for polyethylene and at 230°C for polypropylene according to ISO 1133.

**(b) Melt temperature (T$_m$)**

Differential Scanning Calorimetry (DSC) experiments were run on a TA Instruments Q2000 device calibrated with Indium, Zinc, Tin according to ISO 11357-1. The measurements were run under nitrogen atmosphere (50 mL min-1) on 5$\pm$0.5 mg samples in a heat/cool/heat cycle with a scan rate of 10 °C/min between -30 °C and 225 °C according to ISO 11357-3. Melting (Tm) and crystallisation (Tc) temperatures were taken as the peaks of the endotherms and exotherms in the cooling cycle and the second heating cycle respectively.

**(c) Xylene cold solubles**

The xylene cold solubles matter was determined as the percentage of polymer mass that remains soluble in xylene at 25°C when a solution of polymer is held at that temperature for a specified period of time, using the gravimetric method according to ISO 1615.

**(d) Polymer density**

The polymer density is measured according to the density immersion method described in ISO 1183.

**(e) Density of carbonaceous structures**

Densities are determined using a method similar to ASTM D7481 - 09, i.e. weighing a specified volume of material after at least three taps.

**(f) BET**

BET is determined using ASTM D6556-04.

**(g) Volatility**

Volatilities are determined using thermogravimetric analysis under nitrogen.

**(h) PSD**

Particle size distribution is determined by scanning electron microscopy without statistical analysis.

**(i) Scanning Electron Microscopy (SEM) for Figure 2**

The powder sample was sprinkled onto an aluminum stub affixed with conductive carbon sticker for SEM imaging. The SEM micrograph was taken using a Zeiss Ultraplus field emission SEM using the InLens secondary electron detector. An acceleration voltage of 10kV, aperture of 7 $\mu$m and a working distance of 2.6 mm were used to acquire this image.

**(j) Scanning Electron Microscopy (SEM) for Figures 3 and 4**

SEM micrographs were collected using a FEI Quanta 200F. The rGOW particles were placed on a sample holder and imaged as-is, typically with a secondary electron detector, spot 2, and 5 kV acceleration voltage.

**(k) Volume Resistivity**

For the measurement of volume resistivity 2 mm thick plaques were pressed at 150°C for PE-based polymers and 220°C for PP-based polymers for two minutes. The plaques were subsequently cooled down to room temperature, and placed in between two metallic electrodes. Then the plaques were heated to 120°C for 30 min to anneal the sample and ensure a good contact between the compound and the electrodes. The compounds were slowly cooled down to room temperature (22°C). The resistivity R in ohm is measured using an ohm-meter. The area A is calculated as $A=\pi(d/2)^2$, where d is the diameter of the circular electrodes in cm. The volume resistivity $\rho$ is calculated as

$$\rho = R\frac{A}{L}$$

where L is the thickness of the plaques after annealing in cm. All the distances are measured by callipers or micrometer screw.

**(l) Electrical Percolation Threshold**

The electrical percolation threshold as defined above was determined as follows:
The electrical conductivity of each of the samples comprising different amounts of the filler is calculated as the reciprocal of the electrical resistivity measured above:

$$\sigma = \frac{1}{\rho}$$

The obtained values of the electrical conductivity are plotted against the values of the amount of the filler. The percolation threshold was determined from the plot as the critical (minimum) concentration in wt% of the carbonaceous structures (b) in the olefin polymer base resin (a) where an exponential increase (at least 2-3 order of magnitude) in electrical conductivity is observed, as will be shown below.

**(m) Post-percolation Conductivity**

The post-percolation conductivity is the electrical conductivity above the percolation threshold in situations where the network is fully developed and, despite further addition of the filler, the change in electrical conductivity is minimal (within an order of magnitude). Thus, the post-percolation conductivity is determined from the plot at the area of the curve, where the exponential growth of the electrical conductivity has stopped and the curve has flattened.

**(n) Compounding**

Filled polyolefin compositions having incorporated carbonaceous structures were prepared as follows:

All samples were produced using a Brabender mixer (Plasticoder PLE-331). The mixer was preheated (150°C for polyethylene-based resins, 210°C for polypropylene-based resins) prior to the addition of the resin. The rotation speed was set to 10 rpm. The resin was added first followed by the filler. As soon as all the components were added, the rotation speed was increased to 50rpm and kept for 10 minutes. After the mixing was done, the composition was pelleted and samples were prepared for the relevant tests.

**3. Results**

In the following Tables properties of the obtained semiconductive polyolefin compositions are shown.

**Table 2**

| | Filler Type | Filler Amount (wt%) | Conductivity (S/cm) | MFR$_2$ 2.16 (g/10min) | MFR$_{21}$ 21.6 (g/10min) |
|---|---|---|---|---|---|
| PP1 | x | 0 | x | 4.12 | x |
| PP1 | GNP M-25 (CE1) | 0.5 | 2.009E-11 | N/A | N/A |
| | | 1.0 | 1.151E-11 | 4.74 | x |
| | | 3.0 | 6.498E-12 | N/A | N/A |
| | | 5.0 | 2.392E-11 | 3.48 | x |
| | | 8.0 | 1.446E-11 | 2.97 | x |
| | | 10 | 2.071E-11 | 2.64 | x |
| | | 12 | 8.993E-05 | 2.34 | x |
| | | 14 | 9.166E-04 | N/A | N/A |
| | | 16 | 6.345E-04 | N/A | N/A |
| | | 20 | 2.893E-04 | 1.17 | x |
| PP1 | CS-1 (IE1) | 0.04 | 7.128E-12 | 3.63 | x |
| | | 1.0 | 2.195E-11 | 2.28 | x |
| | | 1.25 | 3.059E-11 | 1.86 | x |
| | | 3.125 | 2.001E-05 | 0.81 | x |
| | | 6.25 | 1.021E-05 | 0.23 | x |
| PP1 | CS-2 (IE2) | 1.0 | 2.078E-11 | 2.53 | x |
| | | 2.5 | 3.015E-11 | 1.68 | x |
| | | 5.0 | 1.433E-05 | 0.62 | x |
| PP1 | CS-3 (IE3) | 5 | 1.915E-02 | 0.088 | x |
| | | 10 | 1.287E-02 | x | 6.03 |
| PP1 | CS-4 (IE4) | 1.0 | 2.323E-04 | 1.87 | x |
| | | 2.5 | 1.105E-03 | 0.73 | x |
| | | 6.0 | 3.236E-02 | x | 44.2 |
| PP1 | CS-5 (IE5) | 0.2 | 2.296E-09 | | |
| | | 0.5 | 3.488E-09 | | |
| | | 1 | 1.000E-11 | | |
| | | 1.5 | 3.269E-09 | | |
| | | 2 | 6.548E-07 | | |
| | | 2.5 | 2.925E-4 | | |
| | | 3.5 | 0.00243 | | |
| | | 4 | 0.00518 | | |
| | | 5 | 0.00354 | | |

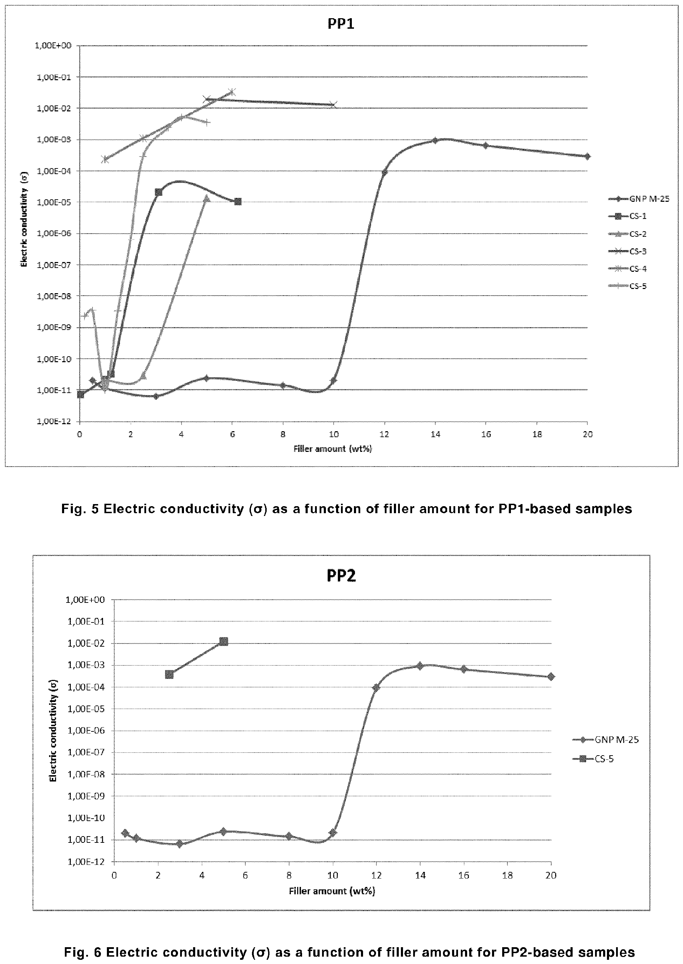

In Table 2 and Fig. 5, the conductivity data of the different PP1-based compositions can be seen. In Figure 5, the values of electric conductivity are plotted against the values of filler amount for each filler type. As may be seen in Fig. 5, GNP M-25 filled samples (comparative example 1, CE1) exhibit an electrical percolation threshold at ~10 wt% with the post-percolation conductivity reaching a level of ~$10^{-4}$-$10^{-3}$ S/cm at fillings above 10 wt%. The CS-filled samples (inventive) exhibit an electrical percolation threshold at ~1.5-3 wt% (CS-2, inventive example 2, IE2) and below 2 wt% (CS-1 (IE1), CS-3 (IE3), CS-4 (IE4) and CS-5 (IE5)). CS-2 provides a post-percolation conductivity reaching a level of ~$10^{-5}$ S/cm while CS-4 provides a further improved post-percolation conductivity by reaching a level of ~$10^{-2}$-$10^{-1}$ S/cm. CS-1 exhibits a post-percolation conductivity reaching a level of ~$10^{-5}$-$10^{-4}$ S/cm. CS-5 exhibits a further improved post-percolation conductivity by reaching a level of ~$10^{-3}$-$10^{-2}$S/cm, whereas CS-3 exhibits a post-percolation conductivity at a level of ~$10^{-2}$-$10^{-1}$ S/cm. Thus, the inventive graphene nanoparticle-filled compositions offer a significant reduction of the onset of the electrical percolation threshold of the order of ~10 with respect to the GNP M-25.

**Table 3**

| Material | Filler Type | Filler Amount (wt%) | Conductivity (S/cm) |
|---|---|---|---|
| PP1 | x | 0 | x |
| PP1 | GNP M-25 (CE1) | 0.5 | 2.009E-11 |
| | | 1.0 | 1.151E-11 |
| | | 3.0 | 6.498E-12 |
| | | 5.0 | 2.392E-11 |
| | | 8.0 | 1.446E-11 |
| | | 10 | 2.071E-11 |
| | | 12 | 8.993E-05 |
| | | 14 | 9.166E-04 |
| | | 16 | 6.345E-04 |
| | | 20 | 2.893E-04 |
| PP2 | CS-5 (IE6) | 1 | x |
| | | 2.5 | 3.77E-04 |
| | | 5 | 1.24E-02 |

In Table 3 and Figure 6, the conductivity data of the PP2-based compositions can be seen. When GNP M-25 is used as filler (CE1), the electrical percolation threshold is reached at a filler loading of ~10 wt%. For the CS-5-based systems (inventive example 6, IE6), the percolation threshold is reached already at the filler loading about 2.5 wt%, indicating very efficient mixing of the filler during compounding. For the CS-5 system, the electric conductivity is at the level of ~$10^{-2}$ S/cm at a loading of 5 wt%. This value is comparable with traditional CB-based systems, although at a much lower loading (5 wt% vs. 35-40 wt%).

**Table 4**

| Material | Filler Type | Filler Amount (wt%) | Conductivity (S/cm) | MFR$_2$ 2.16 |
|---|---|---|---|---|
| PP3 | GNP M-25 (CE2) | 5 | 1.744E-11 | 2.33 |
| | | 10 | 9.372E-11 | 2.2 |
| PP3 | CS-1 (IE7) | 1.25 | 7.096E-11 | 2.38 |
| | | 2.3 | 3.996E-11 | 1.8 |
| | | 3.125 | 6.965E-08 | 1.24 |
| | | 6.25 | 2.829E-04 | 0.82 |
| PP3 | CS-2 (IE8) | 1 | 2.023E-11 | 3.15 |
| | | 2.5 | 4.832E-11 | 2.06 |
| | | 5 | 2.396E-05 | 0.88 |
| PP3 | CS-5 (IE9) | 0.1 | 4.161E-9 | |
| | | 0.2 | 3.866E-9 | |
| | | 0.5 | 1.761E-8 | |
| | | 1 | 4.197E-9 | |
| | | 2 | 8.931E-6 | |
| | | 2.5 | 1.891E-4 | |
| | | 3 | 0.00113 | |
| | | 3.5 | 0.00364 | |
| | | 4 | 0.00311 | |
| | | 4.5 | 0.00913 | |
| | | 5 | 0.01172 | |

In Table 4 and Fig. 7, the conductivity data of the different PP3 (40% XCS)-based compositions can be seen. As may be seen in Fig. 7, the GNP M-25 filled samples (comparative) exhibit no electrical percolation threshold, despite the relatively high loadings. The samples with CS-1, CS-2 and CS-5 fillers (inventive example 7, 8 and 9, respectively) exhibit a very low electrical percolation threshold in the order of ~2.5 wt% indicating very efficient compounding of the nanoparticles in the PP3 resin matrix. The CS-2 samples exhibit a post-percolation conductivity of ~$10^{-5}$ S/cm at a loading of 5 wt%, while the CS-2 samples achieve a post-percolation conductivity of ~$10^{-4}$ S/cm at a loading of 5 wt%. These values are comparable with traditional carbon black-based systems, however at an extremely reduced filler loading (5 wt% vs. 35-40 wt%). Further, in IE9, the post-percolation conductivity reaches a level of ~$10^{-2}$ S/cm at a loading of 5 wt%.

**Table 5**

| Material | Filler Type | Filler Amount (wt%) | Conductivity (S/cm) | MFR$_2$ 2.16 | MFR$_{21}$ 21.6 |
|---|---|---|---|---|---|
| EBA7 | GNP M-25 (CE3) | 10 | 6.43E-11 | 4.25 | |
| | | 15 | 1.69E-06 | | |
| | | 16 | 1.30E-05 | | |
| | | 18 | 1.07E-04 | | |
| | | 20 | 1.30E-04 | | |
| | | 22 | 3.67E-04 | | |
| | | 24 | 3.43E-04 | | |
| | | 28 | 6.46E-04 | | |
| EBA7 | CS-1 (IE10) | 1.25 | 4.65E-11 | 4.1 | |
| | | 2.5 | 8.12E-11 | 3.48 | |
| | | 3.125 | 5.23E-11 | 2.25 | |
| | | 6.25 | 3.66E-06 | 0.755 | |
| EBA7 | CS-2(IE11) | 1 | 8.43E-12 | 3.96 | |
| | | 2.5 | 6.14E-12 | 3.27 | |
| | | 5 | 2.93E-06 | 1.13 | |
| EBA7 | CS-4 (IE12) | 4 | 2.73E-04 | 0.16 | x |
| | | 6 | 9.01E-04 | x | 20.1 |
| EBA7 | CS-5 (IE13) | 6 | 6.25E-04 | 0.04 | |

In Table 5 and Fig. 8 the conductivity data of the different EBA7-based compositions can be seen. The GNP M-25 filled samples (comparative, CE3) exhibit an electrical percolation threshold at ~10-12 wt% with the post-percolation conductivity reaching a level of ~$10^{-4}$-$10^{-3}$ S/cm. The CS-1-based (IE10) and CS-2-based (IE11) samples exhibit an electrical percolation threshold at ~3-4 wt% and ~2-3 wt%, respectively, offering a significant reduction of the onset of the electrical percolation threshold of the order of ~2 with respect to the GNP M-25 filled samples. The CS-4 (IE12) and CS-5 (IE13) samples exhibit an electrical percolation threshold at similar values as the CS-1 samples, but the post-percolation conductivity is higher and reaches the level of about $10^{-4}$-$10^{-3}$ S/cm, a value comparable to the GNP M-25 samples but at approximately 4-6 times lower filler loading.

**Table 6**

| Material | Filler Type | Filler Amount (wt%) | Conductivity (S/cm) | MFR$_2$ 2.16 |
|---|---|---|---|---|
| **EBA0.85** | GNP M-25 (CE4) | 10 | 4.091E-11 | 0.61 |
| | | 1.25 | 1.123E-10 | 0.79 |
| **EBA0.85** | CS-1 (IE14) | 3.125 | 6.607E-11 | 0.275 |
| | | 6.25 | 3.868E-07 | x |

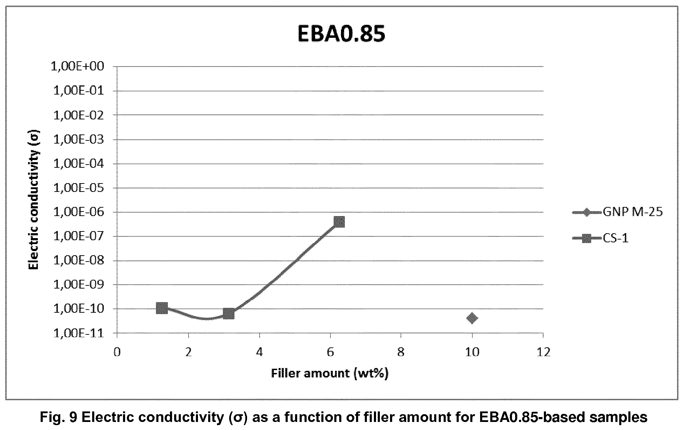

In Table 6 and Fig. 9 the conductivity data of the different EBA0.85-based compositions can be seen. When GNP M-25 (CE4) is used as filler, the percolation threshold is not reached even at relatively high loading of 10 wt%, something observed previously for PP3-systems. For the CS-1-containing samples (IE14) we can see the existence of an electrical percolation threshold at ~3 wt%, offering a significant reduction of the onset of the electrical percolation threshold compared to the GNP M-25.

In conclusion, it has been shown that despite the fact that the inventive compositions of the present invention are compounded by melt-mixing, they provide improved post-percolation conductivity and lower percolation threshold, compared to the previously reported compositions comprising graphene fillers and produced by solution mixing, and thus exhibiting almost perfect dispersion of the carbonaceous structures due to exfoliation in solution. According to the present invention, although no exfoliation of the carbonaceous structures occurs prior to the compounding step, the dispersion of the carbonaceous structures is still very good.

Although the present invention has been described with reference to various embodiments, those skilled in the art will recognize that changes may be made without departing from the scope of the invention. It is intended that the detailed description be regarded as illustrative, and that the appended claims including all the equivalents are intended to define the scope of the invention.

**Claims**

1. A semiconductive polyolefin composition comprising

    (a) an olefin polymer base resin, and
    (b) carbonaceous structures

    wherein the semiconductive polyolefin composition has an electrical percolation threshold of not more than 10 wt% of the carbonaceous structures (b) dispersed in the olefin polymer base resin (a) and a post-percolation conductivity of at least $1 \cdot 10^{-5}$ S/cm at a loading of lower than 10 wt% of the carbonaceous structures (b) in the olefin polymer base resin (a),
    the electrical percolation threshold being defined as the critical concentration in wt% of the carbonaceous structures (b) in the olefin polymer base resin (a) where an exponential increase in electrical conductivity is observed.

2. The semiconductive polyolefin composition according to claim 1, wherein the carbonaceous structures (b) have a BET surface area of at least 200 m$^2$/g.

3. The semiconductive polyolefin composition according to claim 1 or 2, wherein the carbonaceous structures (b) have a density less than 100 g/L.

4. The semiconductive polyolefin composition according to claim 1 or 2, wherein the carbonaceous structures (b) have a density of between 15 and 100 g/L.

5. The semiconductive polyolefin composition according to claim 1 or 2, wherein the carbonaceous structures (b) have a density of between 5 and 15 g/L.

6. The semiconductive polyolefin composition according any one of the preceding claims, wherein the carbonaceous structures (b) have volatile content of less than 30%.

7. The semiconductive polyolefin composition according to any one of the preceding claims, wherein the length L of the carbonaceous structures (b) is at least 1 $\mu$m.

8. The semiconductive polyolefin composition according to any one of the preceding claims, wherein the diameter d of the carbonaceous structures (b) is from 50 nm to 200 $\mu$m.

9. The semiconductive polyolefin composition according to any one of the preceding claims, wherein the carbonaceous structures (b) have an aspect ratio of length L to diameter d that is 1:1 or more.

10. The semiconductive polyolefin composition according to any one of the preceding claims, wherein the added amount of said carbonaceous structures is in the range of from 0.1-10 wt% based on the total weight of the polyolefin composition.

11. The semiconductive polyolefin composition according to any one of the preceding claims, wherein the olefin polymer base resin (a) is selected from the group consisting of a $C_2$ to $C_8$ olefin homo- or copolymer.

12. The semiconductive polyolefin composition according to any one of the preceding claims, wherein the olefin polymer base resin (a) comprises a copolymer of ethylene with at least one comonomer selected from unsaturated esters or a heterophasic propylene copolymer.

13. A power cable comprising a semiconductive layer which comprises the semiconductive polyolefin composition as defined in any one of the preceding claims.

14. Use of a semiconductive polyolefin composition as defined in any one of the preceding claims 1 to 12 in a semiconductive layer of a power cable.

$s_1$

$\alpha$

$s_2$

FIG. 1a

FIG. 1b

FIG. 2

EP 3 495 412 A1

Fig. 3 SEM picture of CS-1 and GNP M-25

Fig. 4 SEM picture of CS-2 and GNP M-25

Fig. 5 Electric conductivity (σ) as a function of filler amount for PP1-based samples

Fig. 6 Electric conductivity (σ) as a function of filler amount for PP2-based samples

Fig. 7 Electric conductivity (σ) as a function of filler amount for PP3-based samples

Fig. 8 Electric conductivity (σ) as a function of filler amount for EBA7-based samples

Fig. 9 Electric conductivity (σ) as a function of filler amount for EBA0.85-based samples

Europäisches
Patentamt

European
Patent Office

Office européen
des brevets

# EUROPEAN SEARCH REPORT

Application Number

EP 17 20 6403

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/072448 A1 (SHI JINJUN [US] ET AL) 19 March 2009 (2009-03-19) * paragraph [0034] * * paragraph [0071]; claim 10 * * paragraph [0041]; claim 14 * * paragraphs [0003], [0030] - [0033] * | 1-14 | INV. C08K3/04 |
| A,D | WO 03/024602 A1 (CORNERSTONE TECHNOLOGIES L L C [US]) 27 March 2003 (2003-03-27) * claim 25; tables 1, 2, 4 * | 1-14 | |

TECHNICAL FIELDS
SEARCHED        (IPC)

C08K

The present search report has been drawn up for all claims

| Place of search | Date of completion of the search | Examiner |
|---|---|---|
| Munich | 14 May 2018 | Gerber, Myriam |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 20 6403

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2018

| Patent document cited in search report | Publication date | Patent family member(s) | Publication date |
|---|---|---|---|
| US 2009072448 A1 | 19-03-2009 | NONE | |
| WO 03024602 A1 | 27-03-2003 | US 2002054995 A1<br>WO 03024602 A1 | 09-05-2002<br>27-03-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5556697 A
- WO 2008045778 A1
- WO 2008143692 A1
- US 2004127621 A1
- US 2002054995 A1
- US 2006241237 A1
- US 2006231792 A1
- WO 03024602 A1
- EP 2374842 B1
- WO 2013033603 A1
- US 20060231792 A
- WO 03002652 A

### Non-patent literature cited in the description

- McGraw-Hill Dictionary of Scientific and Technical Terms. 1989, 1698
- **SCHNIEPP.** *Journal of Physical Chemistry B,* 2006, vol. 110, 8535
- **STANKOVICH et al.** *Nature,* 2006, vol. 442, 282
- **SCHNIEPP.** *Journal of Physical Chemistry B,* 2006, vol. 110, 853
- Controlling the Morphology of Polymers
- Controlling the Morphology of Polymers. Springer International Publishing, 2016
- Encyclopedia of Polymer Science and Engineering. 1986, vol. 6, 383-410
- Polyethylene: High-pressure. **R.KLIMESCH ; D.LITTMANN ; F.-O. MÄHLING.** Encyclopedia of Materials: Science and Technology. Elsevier Science Ltd, 2001, 7181-7184